# EUROPÄISCHE PATENTSCHRIFT

(11) **EP 2 948 287 B1**
(45) Veröffentlichungstag und Bekanntmachung des Hinweises auf die Patenterteilung: **04.10.2017**
(21) Anmeldenummer: 14703787.3
(22) Anmeldetag: 23.01.2014
(51) Int. Cl.: B29C 45/14, C23C 14/20, C23C 4/02, C23C 4/06, C23C 4/12, C23C 16/04, C23C 16/50, B29C 45/16, B29L 31/34

(54) **VERFAHREN ZUR HERSTELLUNG EINES BAUTEILS MIT STRUKTURIERTER OBERFLÄCHE**
METHOD FOR THE PRODUCTION OF A COMPONENT WITH STRUCTURED SURFACE
PROCÉDÉ DE FABRICATION D'UN ÉLÉMENT À SURFACE STRUCTURÉE

(30) Priorität: 24.01.2013 DE 102013100708
(43) Veröffentlichungstag der Anmeldung: 02.12.2015
(73) Patentinhaber: Plasma Innovations GmbH, 4800 Attnang-Puchheim (AT); Pôle Européen de Plasturgie, 01100 Bellignat (FR)
(72) Erfinder: BISGES, Michael, 93049 Regensburg (DE); GIROUD, Alexandre, 01160 Priay (FR); MOGUEDET, Mael, 01100 Oyonnax (FR); VEILLE, Amaury, 01100 Oyonnax (FR)
(74) Vertreter: Kohlmann, Kai
(86) Internationale Anmeldenummer: PCT/EP2014/051312
(87) Internationale Veröffentlichungsnummer: WO 2014/114707

(56) Entgegenhaltungen:
- EP-A1- 0 346 266
- DE-A1-102008 011 249
- FELDMANN K ET AL: "TECHNOLOGIE 3D-MID//3D-MID TECHNOLOGY", KUNSTSTOFFE INTERNATIONAL, CARL HANSER VERLAG, DE, Bd. 94, Nr. 4, 1. Januar 2004 (2004-01-01) , Seiten 17-24, XP008032245, ISSN: 0945-0084

## Beschreibung

Die Erfindung betrifft ein Verfahren zur Herstellung eines 3D-MID Bauteils mit einer strukturierten Oberfläche.

Als Molded Interconnect Devices (englisch für: Spritzgegossene Schaltungsträger), kurz MID, werden Bauteile bezeichnet, bei denen elektrische und mechanische Funktionen in ein Spritzgußteil integriert werden. Wesentliche Einsatzgebiete für die MID-Technik sind der Automobilbau, die Industrieautomatisierung, die Medizintechnik, die Hausgeräteindustrie, die Telekommunikationstechnik, die Mess-und Analysetechnik sowie die Luft- und Raumfahrt. Die Vorteile der MID-Technik liegen sowohl in der verbesserten Gestaltungsfreiheit und Umweltverträglichkeit, als auch in einem wirtschaftlichen Herstellungsprozess.

Aus der DE 10 2008 011 249 A1 ist es bereits bekannt, mittels Plasmabeschichtung strukturierte Oberflächen auf Substraten herzustellen. Diese werden meist dazu benutzt, Schichtdicken von weit mehr als 30 µm zu produzieren. Dazu muss ein Maskierungsverfahren zur Aufprägung des Beschichtungsmusters eingesetzt werden. Bei der Plasmabeschichtung liegt eine Besonderheit darin, dass das im Plasma erhitzte Beschichtungsmedium, wie Pulver oder Aerosol, großflächig aus der Düse austritt und gleichzeitig auch als verdampftes Material (Nanopartikel) vorliegen kann. Durch den Strömungsdruck unterwandern diese Nanopartikel die heute üblichen aufliegenden Schablonen am Rand, allein schon verursacht durch die Oberflächenrauhigkeit des Substrats. Weiterhin bekannt ist es, mit gedruckten Masken zu arbeiten; dabei entsteht eine vollflächig geschlossene Beschichtung auf den Maskenstrukturen, und ein gezieltes Ablösen ist nicht mehr oder doch zumindest nur unter Schwierigkeiten möglich.

Als Masken kommen beim Stand der Technik in der Regel biegeschlaffe Materialien zum Einsatz, die nicht in der Lage sind, die jeweiligen Maskierungskanten mit einer definierten Anpresskraft vorzuspannen, was das weiter oben erläuterte Unterwandern der Konturen verstärkt.

Weiterhin ist es bereits bekannt, eine Schablonenmaskierung mittels Laserschablonen vorzunehmen, die mittels Vakuum angepresst werden kann. Dieses Verfahren erfordert allerdings Bohrungen im Substrat, zudem sind nur bestimmte Strukturen realisierbar, da die Schablone eine bestimmte geometrische und innere Steifigkeit zur Handhabung benötigt.

Aus der DE 44 32 966 A1 ist ein Verfahren zur Herstellung eines Bauteils aus Kunststoff bekannt, das mit einem von einer ersten Komponente aus Kunststoff gebildeten Formkörper und einem am Formkörper vorgesehenen elektrisch leitenden Abschnitt versehen ist, der durch Aufbringen einer Metallschicht auf einem der Form und dem Verlauf des Abschnittes entsprechenden Oberfläche eines Bereichs erzeugt wird, der aus einer zweiten Komponente eines Kunststoffes besteht. Der Formkörper und der in diesem Formkörper vorgesehene Bereich werden in einem Zweikomponenten-Spritzgussverfahren hergestellt, wobei das Aufbringen der Metallschicht durch stromloses oder rein chemisches Abscheiden erfolgt.

Aus der US 5 407 622 A ist ein Verfahren zur Herstellung eines einheitlichen, nicht leitfähigen Gegenstandes mit einem Schaltungsmuster bekannt, das die folgenden Schritte aufweist:
- Gießen eines ersten isolierenden Materials in eine Form, wobei das erste Material einen aktivierbaren katalytischen Füllstoff für eine festhaftende Metallisierung enthält,
- Gießen eines zweiten isolierenden Materials in eine Form, wobei das zweite Material keinen aktivierbaren katalytischen Füllstoff für die Metallisierung enthält,
- Verbinden der ersten und zweiten Form zum Herstellen des nicht leitfähigen Gegenstandes, der frei liegende Bereiche des ersten Materials aufweist, die für die festhaftende Metallisierung bestimmt sind und
- Aktivierung des katalytischen Füllstoffs und Ausbilden eines festhaftenden Metallniederschlags auf den frei liegenden Bereichen.

Die EP 0 346 266 A1 offenbart ein Verfahren zum Diffusionsabscheiden einer metallischen Schicht auf einem Flügel einer Gasturbine, umfassend ein Strömungsprofil, das sich von einer Basis nach außen erstreckt. Auf der gegenüberliegenden Seite der Basis befindet sich ein Rumpf des Flügels. Um selektiv lediglich das Strömungsprofil im Wege des Diffusionsabscheideverfahrens metallisch zu beschichten, wird der Flügel teilweise mit einer Maskierung versehen. Die Maskierung wird auf den Rumpf und die nach innen weisende Seite der Basis im Wege eines herkömmlichen Spritzgießprozesses aufgebracht. Nach der Maskierung wird die Metallbeschichtung im Wege eines Diffusionsabscheideverfahrens aufgebracht. Schließlich wird die Maskierung von dem maskierten Teil des Flügels entfernt.

Aus FELDMANN K ET AL: "TECHNOLOGIE 3D-MID//3D-MID TECHNOLOGY", KUNSTSTOFFE INTERNATIONAL, CARL HANSER VERLAG, DE, Bd. 94, Nr. 4, 1. Januar 2004 (2004-01-01), Seiten 17-24, XP008032245, ISSN: 0945-0084 sind verschiedene Verfahren zur Herstellung von 3D-MID Bauteilen bekannt. Unter anderem wird das Zweikomponenten-Spritzgießen von 3D-MID Bauteilen als dasjenige MID-Herstellungsverfahren mit der größten Gestaltungsfreiheit beschrieben. Bei dem sogenannten PCK-Verfahren wird für den ersten Spritzgießvorgang (erster Schuss) zunächst ein metallisierbarer, nicht elektrisch leitender Kunststoff verwendet. Dabei wird die Leiterbahngeometrie des MID-Bauteils erhaben abgebildet. In einem zweiten Schuss werden die Bereiche zwischen den Leiterbahnen mit einem nicht metallisierbaren Kunststoff ausgefüllt, der sich haftfest mit dem ersten Kunststoff verbindet. Nach dem zweiten Schuss hat das MID-Basisteil seine endgültige geometrische Form und es werden anschließend die entsprechenden Metalle auf den metallisierbaren Kunststoff aufgebracht. Hierzu wird zunächst die Oberfläche des metallisierbaren Kunststoffs aktiviert oder dem metallisierbaren Kunststoff wird Palladium beigemischt, das als Keim für die Metallisierung dient. In diesem Fall ist keine Aktivierung erforderlich.

Aufgabe der Erfindung ist es 3-D-MID Bauteile mit einer strukturierten Oberfläche mit einer Schichtdicke im Bereich von 0,01 bis 1000 µm in einem in Prozess mit kurzen Taktzeiten herzustellen.

Diese Aufgabe wird durch ein Verfahren mit den Merkmalen des Patentanspruchs 1 gelöst. Die Unteransprüche betreffen vorteilhafte Weiterbildungen der Erfindung.

Die Erfindung beruht auf dem Gedanken, einen Spritzguss-Formkörper unmittelbar auf einem ersten spritzgegossenen Formkörper nicht haftfest derart aufzubringen, dass Oberflächenbereiche des ersten Formkörpers für einen nachfolgenden Plasmabeschichtungsprozess zugänglich bleiben. Die beiden Formkörper werden nach der Plasmabeschichtung voneinander getrennt und die strukturierte Beschichtung verbleibt auf den frei liegenden Bereichen auf dem ersten Formkörper. Die nicht haftfeste Verbindung erlaubt das zerstörungsfreie Trennen jedes zweiten Formkörpers von jedem ersten Formkörper des Verbundkörpers. Die Verbindung der ersten und zweiten Formkörper zu einem Verbundkörper beruht im Wesentlichen auf den Adhäsionskräften zwischen den ersten und zweiten Formkörpern.

Zur Herstellung der strukturierten Oberfläche des 3D-Bauteils wird der nicht haftfeste Verbundkörper aus dem mindestens einen ersten Spritzguß-Formkörper und dem mindestens einen zweiten Spritzguß-Formkörper mittels Mehrkomponentenspritzguß derart hergestellt, dass Teilbereiche der Oberfläche des ersten Formkörpers frei bleiben, anschließend eine vorzugsweise vollflächige Beschichtung der gesamten Oberfläche des Verbundkörpers mittels Plasma erfolgt und nachfolgende von dem Verbundkörper der plasmabeschichtete zweite Formkörper abgelöst wird, so dass die direkt auf dem ersten Formkörper haftende, verbleibende Plasmabeschichtung das gewünschte Muster der Beschichtung aufweist. Der zweite, als Spritzgußteil aus reinem Polymermaterial hergestellte Formkörper kann durch einen Reinigungsschritt vom Metall getrennt werden und anschließend recycelt werden.

Der Mehrkomponentenspritzgußprozess ist besonders geeignet, um zwei Bauteile passgenau, nicht haftfest miteinander zu verbinden. Diese Technologie wird derzeit insbesondere für die Herstellung von Gelenken und anderen beweglichen Elementen eingesetzt die aus Kunststoffen hergestellt werden. Die Nutzung dieser Technologie für ein nachfolgendes Beschichtungsverfahren ist jedoch bisher unbekannt.

Als Materialien können alle spritzgießfähigen Kunststoffe eingesetzt werden. Um einen nicht haftfesten Verbund zu erhalten eignen sich besonders Polyamide oder andere von der Oberflächenspannung unverträgliche Polymere.

Der erste Formkörper kann eine weitgehend beliebige Form aufweisen. Insbesondere kann der erste Formkörper auch flächig, beispielsweise als Platte ausgeführt sein.

In einer Ausgestaltung der Erfindung sind die für die Beschichtung vorgesehenen Bereiche als Vertiefungen in der Oberfläche des ersten Formkörpers ausgestaltet, so dass die fertige Beschichtung nicht auf der Bauteiloberfläche aufliegt, sondern geschützt im Bauteil liegt. Bei Beschichtungshöhen von 1-1000µm sollte die Vertiefung mindestens im gleichen Bereich liegen. Die Passgenauigkeit des zweiten Formkörpers zu den Vertiefungen im ersten Formkörper stellt kein Problem dar, da der Spritzgießprozess im selben Werkzeug mit einer zweiten Komponente sich quasi selbstjustiert. Die Selbstjustierung stellt einen besonderen Vorteil des Verfahrens dar, da ansonsten immer Passungs-Probleme zwischen der abgeschiedenen elektrischen Struktur und dem Bauteil auftreten.

Die Strukturgrößen, die im Spritzgießprozess realisierbar sind, gehen bis in den Nanometerbereich, wie es etwa beim Spritzgießen von optischen Speichermedien (CD, DVD, BluRay) der Fall ist. Hierdurch ergeben sich völlig neue Möglichkeiten für hochauflösende Schaltungen mit einer hohen Packungsdichte an elektronischen Bauteilen.

In einer vorteilhaften Ausgestaltung der Erfindung, werden elektrische Bauteile in das Spritzgießwerkzeug eingelegt, die mit dem ersten Formkörper umspritzt und/oder hinterspritzt werden. Diese Verfahrensführung eröffnet die Möglichkeit, Kontakte der elektrischen Bauteile direkt mittels der anschließend durchgeführten Plasmabeschichtung zu kontaktieren und untereinander zu verbinden. Als Bauteile kommen beispielsweise auch metallische Durchführungen oder Displays in Betracht. Ein nachfolgender Löt- oder Verbindungsschritt wird hierdurch überflüssig.

Grundsätzlich bietet sich das Verfahren auch für komplexe 3D-Bauteile an, da die Selbstjustierung bei der Herstellung in einem Spritzgießwerkzeug eine einfache Positionierung des zweiten Formkörpers zum ersten Formkörper ermöglicht. Ein Umspritzen aller Seiten des ersten Formkörpers ist dabei mit Hilfe einer Halterung des ersten Formkörpers im Werkzeug möglich.

Die freien Bereiche auf dem ersten Formkörper können auch durch mehrere, aufeinanderfolgende Spritzgußprozesse erzeugt werden, wenn die weiteren Formkörper nicht miteinander in Verbindung stehen. Alternativ können Spritzgießwerkzeuge mit mehreren Einspritzkanälen verwendet werden.

Im Weiteren besteht die Möglichkeit mehrere Bereiche der Formkörper über Materialbrücken zu verbinden, die zur Oberfläche des ersten Formkörpers beabstandet sind. Im nachfolgenden Plasmabeschichtungsprozess können diese Materialbrücken bei geeigneter Geometrie und ausreichendem Abstand leicht unterspritzt werden, um die Beschichtungsbereiche vollständig auszufüllen.

Im Unterschied zu bekannten Maskierungstechnologien kann in vorteilhafter Ausgestaltung des erfindungsgemäßen Verfahrens der zweite Formkörper in Richtung der frei liegenden Teilbereiche auf der Oberfläche des ersten Formkörpers mit Schrägen versehen sein. Hierdurch wird eine gleichmäßigere Beschichtung möglich, da Verwirbelungen im Bereich von Kanten vermieden werden. Gleichzeitig können die Formkörper mit günstigeren, großen Querschnitten für den Spritzgießprozess optimiert werden.

Die Materialien können als reine Polymere oder auch als gefüllte Systeme mit Glasfaser, Glaskugeln oder Kohlenstoff an die Anforderungen des Prozesses angepasst werden. Für nachfolgende Hochtemperaturprozesse, wie z.B. das Löten bieten sich gefüllte Hochtemperaturmaterialien an.

Um die nicht haftfeste Verbindung zwischen den Formkörpern zu vereinfachen, besteht die Möglichkeit im Spritzgießprozess zwischen den Prozessschritten die Formkörper mit einer Antihaft-Beschichtung zu versehen, bevor der nachfolgende Formkörper hergestellt wird. Dieses können z.B. Nano-basierte Antihaft Mittel oder PTFE Antihaft Mittel sein.

Bei flächigen Formkörpern bietet es sich an, den zweiten Formkörper mit Rippenstrukturen zu versehen, um die Steifigkeit zu erhöhen. Außerdem ist es vorteilhaft, den ersten Formkörper an den Rändern zu umspritzen, um einen besseren Halt des zweiten Formkörpers an dem ersten Formkörper zu erzielen. Eine weitere Möglichkeit zur Verankerung es zweiten Formkörpers an dem ersten Formkörper besteht darin, den ersten Formkörper mit Vertiefungen, insbesondere Löchern zu versehen, in die der zweite Formkörper eingreift. Auch angespritzte Clip-Verbinder zwischen den Formkörpern kommen zur Verankerung in Betracht.

Der nachfolgende Beschichtungsprozess wird vorteilhafterweise als atmosphärischer Plasmabeschichtungsprozess ausgeführt. Atmosphärendruckplasma bezeichnet ein Plasma, bei welchem der Druck ungefähr dem der umgebenden Atmosphäre - dem sogenannten Normaldruck - entspricht. Im Gegensatz zum Niederdruckplasma oder Hochdruckplasma wird kein Reaktionsgefäß benötigt, das für die Aufrechterhaltung eines zum Atmosphärendruck unterschiedlichen Druckniveaus sorgt. Dabei wird in einen Plasmaerzeuger ein Beschichtungsmaterial, z.B. ein metallisches Pulver eingeführt, das durch die Energiezufuhr in dem Plasmaerzeuger aufschmilzt und sich als geschlossene Schicht auf dem Trägermaterial abscheidet. Um die bei dem Verfahren eingesetzten Kunststoffe nicht zu zerstören, bieten sich Plasmaerzeuger in einem Leistungsbereich von 0,1-5 kW Leistung an. Die Anregung des Trägergases für das Beschichtungsmaterial erfolgt insbesondere im Wege der Lichtbogenentladung. Als Beschichtungsmaterial können reine Metalle, Legierungen oder Mischungen zum Einsatz kommen. Auch das Abscheiden von Barriereschichten aus Glas, Keramik oder Polymer ist möglich.

Durch die Abdeckung des ersten Formkörpers außerhalb der frei liegenden Teilbereiche können unfokussierte Plasmaerzeuger mit einem möglichst breiten Plasmastrahl verwendet werden.

Typische Strahlbreiten liegen zwischen 1-50 mm. Die Prozesstemperatur des Plasmastrahls darf die kritische Temperatur des verwendeten Kunststoffs für den ersten Formkörper nicht erreichen, um Schädigungen am Bauteil zu vermeiden.

In einer Ausgestaltung des erfindungsgemäßen Verfahrens werden im Wege der Plasmabeschichtung mehrere metallische Schichten nacheinander auf dem Verbundkörper abgeschieden, um die gewünschten Bauteileigenschaften zu erzielen. Als besonders vorteilhaft hat sich eine Kombination aus einer ersten Schicht Kupfer und einer zweiten Schicht Zinn herausgestellt. Hierdurch wird das Kupfer vor Oxidation geschützt und das Zinn ermöglicht eine gute Lötverbindung in nachfolgenden Produktionsprozessen. Auch die klassischen Paarungen aus Kupfer, Nickel und Gold werden vorteilhaft so realisiert. Die Formkörper bleiben während der mehrfachen Metallisierung verbunden.

Nach der Beschichtung werden die Formkörper des Verbundkörpers voneinander getrennt. Das Trennen kann manuell oder maschinell erfolgen. Vorzugsweise wird zunächst die Beschichtung mittels CO2-Strahlen oder abbürsten von der Oberfläche des Verbundkörpers entfernt. Nachfolgend trennt man die Formkörper. Die Trennung wird erleichtert, wenn der Verbundkörper temperiert, d.h. aufgeheizt und/oder abgekühlt wird. Hierbei nutzt man das unterschiedliche Wärmedehnungsverhalten der für die ersten und zweiten Formkörper verwendeten Materialien. Die Formkörper verlieren die Haftung zueinander und lassen sich leicht trennen.

Man erhält das gewünschte 3D-MID Formteil sowie den bzw. die zweiten Formkörper mit Resten der Beschichtung. Da es sich um reines Polymermaterial handelt, kann jeder zweite Formkörper mit den Standardprozessen der Kunststofftechnik recycelt und dem Prozess erneut zugeführt werden. Eine Kontamination mit Beschichtungsmaterial, z.B. Metallpulver ist unkritisch wenn das Material wieder für die Herstellung der abschirmenden zweiten Formkörper verwendet wird.

Das erfindungsgemäße Bauteil und das Verfahren zu seiner Herstellung werden nachfolgend an Hand der Figuren näher erläutert. Es zeigen:
- **Figur 1**: ein erfindungsgemäß hergestelltes 3D-MID Bauteil,
- **Figur 2**: ein schematische Darstellung zur Veranschaulichung des erfindungsgemäßen Verfahrens, wobei
- **Figur 2 A)**: eine Aufsicht und eine Seitenansicht eines ersten Formkörpers zeigt,
- **Figur 2 B)**: eine Aufsicht und eine geschnittene Seitenansicht eines Verbundkörpers aus dem erstem und zwei zweiten Formkörpern zeigt,
- **Figur 2 C)**: eine Aufsicht und eine geschnittene Seitenansicht des mit einer Beschichtung versehenen Verbundkörpers nach Figur 2B) zeigt sowie
- **Figur 2 D)**: eine geschnittene Seitenansicht eines erfindungsgemäßen Bauteils nach dem Entfernen der beiden zweiten Formkörper von dem Verbundkörper nach Figur 2C) zeigt,
- **Figur 3**: unterschiedlichen Ausführungsformen eines Verbundkörpers, wobei
- **Figur 3 A)**: eine Aufsicht und eine geschnittene Seitenansicht eines Verbundkörpers aus einem erstem und zwei zweiten Formkörpern mit Abschrägungen zeigt, die in Richtung des ersten Formkörpers aufeinander zu laufen,
- **Figur 3 B)**: eine Aufsicht und eine geschnittene Seitenansicht eines Verbundkörpers aus einem erstem und zwei zweiten Formkörpern mit Abschrägungen und Höhensprüngen zur Aussteifung zeigt sowie
- **Figur 3 C)**: eine Aufsicht und eine geschnittene Seitenansicht eines Verbundkörpers aus einem erstem und zwei zweiten Formkörpern zeigt, die durch eine Materialbrücke miteinander verbunden sind,
- **Figur 4**: eine geschnittene Vorder- und Seitenansicht eines Verbundkörpers, bei dem ein erster Formkörper von einem zweiten Formkörper eingeschlossen ist,
- **Figur 5**: einen Verbundkörper mit einer Vertiefung, wobei
- **Figur 5 A)**: eine geschnittene Seitenansicht eines ersten Formkörpers mit darin eingebrachter Vertiefung für den zu beschichtenden Bereich zeigt, sowie
- **Figur 5 B)**: eine geschnittene Seitenansicht eines Verbundkörpers umfassend den ersten Formkörper nach Figur 5 A) und zwei zweite "selbstjustierende" Formkörper zeigt,
- **Figur 6**: eine schematische Darstellung des Plasmabeschichtungsprozesses.

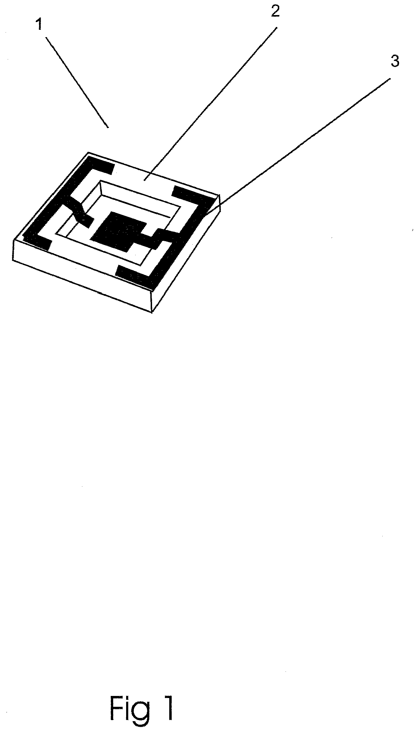

Figur 1 zeigt ein erfindungsgemäßes 3D-MID Bauteil (1) aus einem ersten Formkörper (2) sowie der darauf mittels Plasmabeschichtung aufgebrachten Leiterbahnstruktur (3). Der erste Formkörper (2) besteht aus Polyamid mit einer Vertiefung in der Mitte. Die metallischen Leiterbahnen verlaufen an den seitlichen Kanten und in der Mitte des ersten Formkörpers (2).

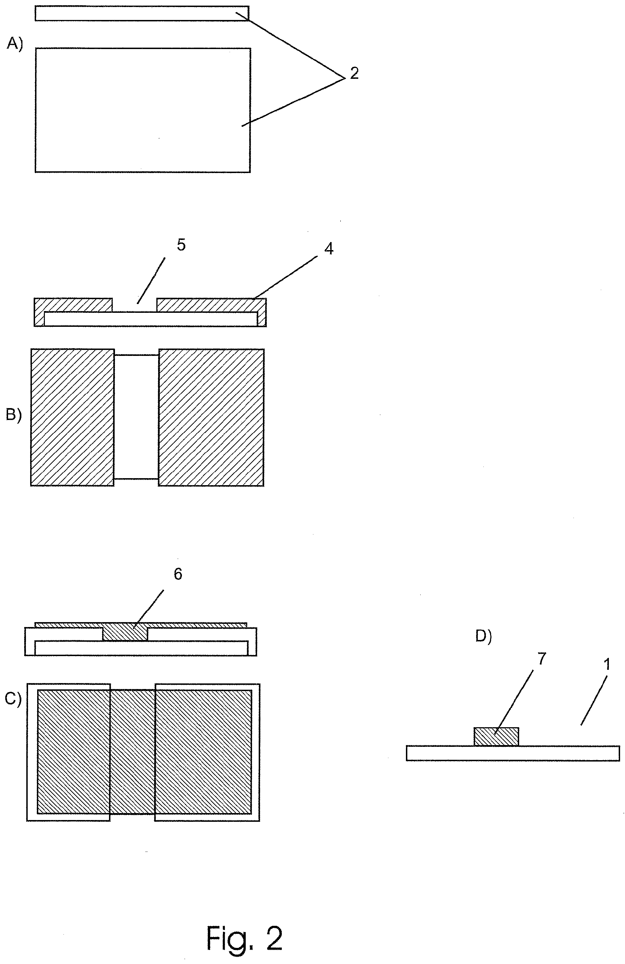

Figur 2 veranschaulicht den Verfahrensablauf für das erfindungsgemäße Verfahren. Auf einem flächigen ersten Formkörper (2), der in Figur 2A) dargestellt ist, werden im Spritzgießverfahren zwei zweite Formkörper (4), die Ränder des ersten Formkörpers (2) umschließend, aufgebracht. Zwischen den beiden zweiten Formkörpern (4) befindet sich ein freier Teilbereich (5) auf der Oberfläche des ersten Formkörpers (2) (vgl. Figur 2B). Mittels Plasmabeschichtung wird eine in Figur 2C) dargestellte großflächige Beschichtung (6) auf den Verbundkörper umfassend den ersten und den zweiten Formkörper (2, 4) abgeschieden. Die Beschichtung (6) sollte dabei vorzugsweise zumindest den gesamten freien Teilbereich (5) des ersten Formkörpers (2) abdecken (vgl. Figur 2C)).

Durch Entfernen der zweiten Formkörper (4) wird das Bauteil (1) fertig gestellt. Auf dem Teilbereich (5) des ersten Formkörpers (2) verbleibt ein Teil (7) der zu zuvor im Wege der Plasmabeschichtung haftfest aufgebrachten Beschichtung (6).

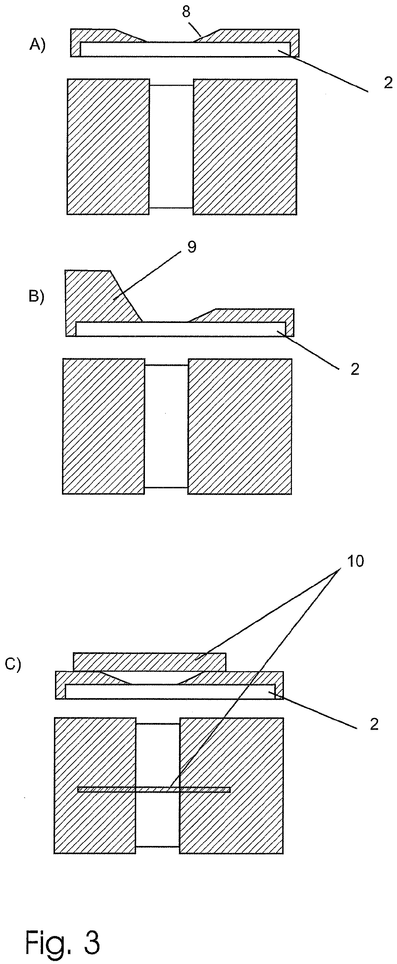

Figur 3 zeigt Varianten eines nicht haftfesten Verbundkörpers aus einem ersten (2) und einem zweiten Formkörper (8,9), der anschließend plasmabeschichtet und von dem nach dem Beschichten die zweiten Formkörper entfernt werden.

Der Verbundkörper nach Figur 3 A) umfasst einen ersten Formkörper (2) und zwei zweite Formkörper (4) mit Abschrägungen (8), die in Richtung des freien Teilbereichs (5) des ersten Formkörpers (2) aufeinander zu laufen. Die Abschrägung ermöglicht eine gleichmäßigere Beschichtung ohne Verwirbelungen oder Schattenbildung im Bereich von senkrechten Kanten.

Der Verbundkörper nach Figur 3 B) umfasst einen ersten Formkörper (2) und zwei zweite Formkörper (4) mit Abschrägungen (8) und einer Erhöhung (9). Die Erhöhung (9) des zweiten Formkörpers (4) verbessert die Steifigkeit. Außerdem lassen sich durch Erhöhungen (9) Fließquerschnitte für den Spritzgießprozess optimieren.

Der Verbundkörper nach Figur 3 C) umfasst einen ersten Formkörper (2) und zwei zweite Formkörper (4), die durch eine Materialbrücke (10) miteinander verbunden sind. Die Materialbrücke (10) verbindet mit einem Abstand zum ersten Formkörper (2) die beiden zweiten Formkörpers (4) miteinander. Materialbrücken(10) sind sinnvoll, wenn ein Materialfluß durch einen Einspritzkanal im Werkzeug nicht möglich ist. Die Materialbrücken (10) sollten dabei so ausgeformt werden, dass eine Plasmaabscheidung unterhalb der Materialbrücke (10) möglich ist, um eine geschlossene Beschichtung auf dem frei liegenden Teilbereich (5) des ersten Formkörpers (2) zu ermöglichen.

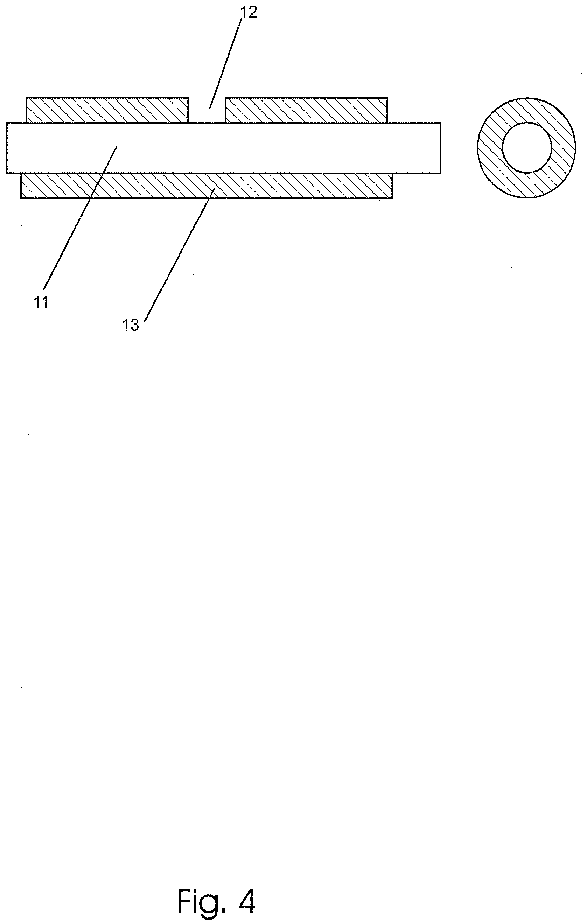

Figur 4 zeigt einen Verbundkörper, bei dem ein erster zylindrischer Formkörper (11) von einem zweiten hohlzylindrischen Formkörper (13) teilweise eingeschlossen ist. Bei der Herstellung des Verbundkörpers bietet der Spritzgießprozess für die Formkörper (11, 13) gegenüber allen anderen Maskierungsverfahren deutliche Vorteile, da solche spritzgegossenen Strukturen passgenauer angefertigt werden können.

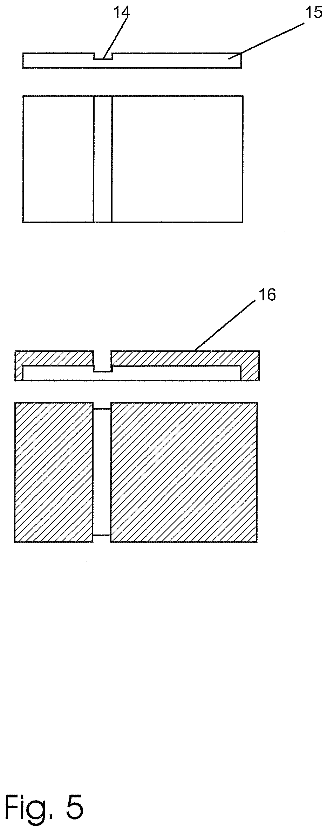

Figur 5 zeigt einen Verbundkörper umfassend einen ersten Formköper (15) mit einer Vertiefung (14) und zwei zweite Formkörper (16), die passgenau bis an die seitlichen Ränder der Vertiefung (14) gespritzt sind. Die Vertiefung (14) bildet bei dieser Ausführungsform zugleich den freigelassenen Teilbereich (5) der Oberfläche des ersten Formkörpers (2). Durch Plasmabeschichtung können elektrische Strukturen in die Vertiefung (14) des ersten Formkörper (2) abgeschieden werden. Ein Zerstören der elektrischen Strukturen, beispielsweise durch Kratzen, wird hierdurch verhindert. Im Spritzgießprozess können feinste Strukturen im Nanometerbereich vertieft abgebildet werden.

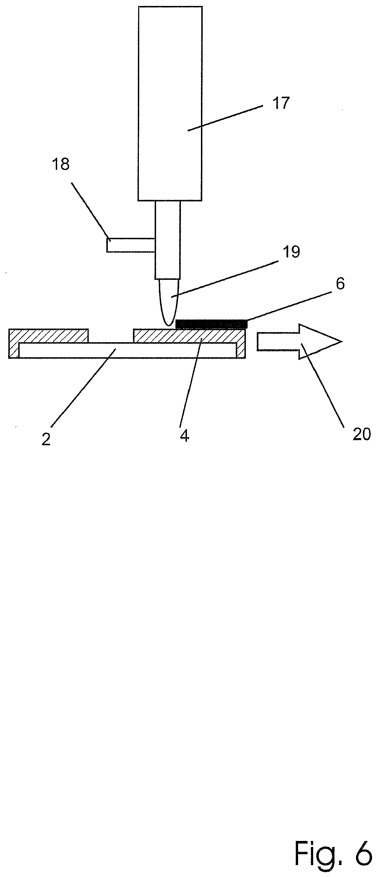

Figur 6 zeigt schematisch den Plasmabeschichtungsprozess mit einem Plasmaerzeuger (17), einer Einspeisung (18) für das Beschichtungsmaterial in das Plasma (19) sowie die auf der Oberfläche des Verbundkörpers abgeschiedene Beschichtung (6). Durch ein sogenanntes linienförmiges abscannen der Oberfläche können die Beschichtungslinien, die eine einzelne Breite von 1-50 mm aufweisen, nahtlos aneinander gelegt werden und eine geschlossenen Oberfläche bilden. Vorzugsweise werden nur die freien Teilbereiche (5) des ersten Formkörpers (2) über eine Steuerung angefahren und komplett beschichtet.

## Patentansprüche

1. Verfahren zur Herstellung eines 3D-MID Bauteils (1) mit einer strukturierten Oberfläche, wobei ein Verbundkörper im Wege des Mehrkomponentenspritzgußverfahrens hergestellt und anschließend beschichtet wird, **dadurch gekennzeichnet, dass**
- der Verbundkörper als nicht haftfester Verbundkörper aus mindestens einem im Spritzgussverfahren hergestellten ersten Formkörper (2) und mindestens einem im Spritzgussverfahren hergestellten zweiten Formkörper (4) derart hergestellt wird, dass Teilbereiche (5) der Oberfläche jedes ersten Formkörpers (2) frei bleiben,
- der Verbundkörper mittels Plasmabeschichtung (6) zumindest teilweise beschichtet wird, so dass die frei liegenden Teilbereiche (5) jedes ersten Formkörpers (2) zumindest teilweise beschichtet werden und
- mindestens ein zweiter Formkörper (4) von dem Verbundkörper entfernt wird.

2. Verfahren nach Anspruch 1, **dadurch gekennzeichnet, dass** mindestens eines der Materialien für den Spritzgießprozess ein Polyamid ist.

3. Verfahren nach Anspruch 1 oder 2, **dadurch gekennzeichnet, dass** mindestens ein erster Formkörper (15) im Spritzgußverfahren hergestellt wird, der Vertiefungen (14) gegenüber der übrigen Oberfläche des ersten Formköpers (15) aufweist, die sich in den frei liegenden Teilbereichen (5) für die Plasmabeschichtung (6) befinden.

4. Verfahren nach einem der Ansprüche 1 bis 3, **dadurch gekennzeichnet, dass** mindestens eines der im Spritzgußverfahren verwendeten Materialien keine oder nur eine geringe Haftung gegenüber einem mittels Plasmabeschichtung (6) aufgebrachtem Beschichtungsmaterial aufweist.

5. Verfahren nach einem der Ansprüche 1 bis 4, **dadurch gekennzeichnet, dass** zwischen den Prozessschritten beim Mehrkomponentenspritzgußverfahren mindestens eines der Materialien der Formkörper (2, 4, 15, 16) mit einer AntiHaft-Beschichtung versehen wird.

6. Verfahren nach einem der Ansprüche 1 bis 5, **dadurch gekennzeichnet, dass** das Entfernen mindestens eines zweiten Formkörpers (4, 16) von dem Verbundkörper unmittelbar nach dem Beschichten erfolgt.

7. Verfahren nach einem der Ansprüche 1 bis 6, **dadurch gekennzeichnet, dass** das Entfernen mindestens eines zweiten Formkörpers (4, 16) von dem Verbundkörper durch gezieltes Aufwärmen und/oder Abkühlen des Verbundkörpers unter Ausnutzung des unterschiedlichen Dehnungsverhaltens der Materialien der ersten Formkörper (2, 15) und der zweiten Formkörper (4, 16) erfolgt.

8. Verfahren nach einem der Ansprüche 1 bis 7, **dadurch gekennzeichnet, dass** mindestens einer der entfernten zweiten Formkörper (4, 16) unmittelbar nach dem Entfernen einem Recyclingverfahren zugeführt wird.

9. Verfahren nach einem der Ansprüche 1 bis 8, **dadurch gekennzeichnet, dass** die Beschichtung in Teilbereichen von dem Verbundkörper insbesondere mittels Trockeneisstrahlen und/oder Abbürsten entfernt wird.

10. Verfahren nach einem der Ansprüche 1 bis 9, **dadurch gekennzeichnet, dass** ein Öffnungsbereich des zweiten Formkörpers (8, 9) zu dem frei bleibenden Teilbereich (5) des ersten Formkörpers (2) abgeschrägt ist.

11. Verfahren nach einem der Ansprüche 1 bis 12, **dadurch gekennzeichnet, dass** von der Oberfläche des ersten Formkörpers (2) beabstandet mindestens eine Materialbrücke (10) über dem frei bleibenden Teilbereich (5) des ersten Formkörpers (2) angeordnet wird.

12. Verfahren nach einem der Ansprüche 1 bis 11, **dadurch gekennzeichnet, dass** mindestens ein erster Formkörper (2) in mehreren Zyklen des Sritzgußverfahrens mit mehreren zweiten Formkörpern (4) umspritzt wird.

13. Verfahren nach einem der Ansprüche 3 bis 12, **dadurch gekennzeichnet, dass** mindestens ein elektronisches und /oder elektrisches Bauteil in das Spritzgießwerkzeug eingelegt und beim Spritzen des ersten Formkörpers (2) umspritzt oder hinterspritzt wird.

14. Verfahren nach einem der Ansprüche 3 bis 12, **dadurch gekennzeichnet, dass** mindestens ein Bauteil aus Metall, Kunststoff, Keramik oder Glas in das Spritzgießwerkzeug eingelegt und beim Spritzen des ersten Formkörpers (2) umspritzt oder hinterspritzt wird.

15. Verfahren nach Anspruch 13 oder 14, **dadurch gekennzeichnet, dass** die in dem ersten Formkörper (2) umspritzten oder hinterspritzten Bauteile bei der anschließenden Plasmabeschichtung (6) direkt mit einem Beschichtungsmaterial in Kontakt gelangen.

## Claims

1. Method for producing a 3D-MID component (1) having a structured surface, wherein a composite is produced by way of the multi-component injection moulding method and then coated, **characterized in that**
- the composite is produced as a non-firmly bonded composite comprising at least one first moulding (2) produced in the injection moulding method and at least one second moulding (4) produced in the injection moulding method in such a manner that partial regions (5) of the surface of each first moulding (2) remain exposed,
- the composite is at least partially coated by means of plasma coating (6) so that the exposed partial regions (5) of each first moulding (2) are at least partially coated and
- at least one second moulding (4) is removed from the composite.

2. The method according to claim 1, **characterized in that** at least one of the materials for the injection moulding process is a polyamide.

3. The method according to claim 1 or 2, **characterized in that** at least a first moulding (15) is produced in the injection moulding method, which has recesses (14) with respect to the remaining surface of the first moulding (15) which are located in the exposed partial regions (5) for the plasma coating (6).

4. The method according to one of claims 1 to 3, **characterized in that** at least one of the materials used in the injection moulding method has no or only a low adhesion with respect to a coating material applied by means of plasma coating (6).

5. The method according to one of claims 1 to 4, **characterized in that** between the process steps in the multicomponent injection moulding method at least one of the materials of the mouldings (2, 4, 15, 16) is provided with an anti-adhesion coating.

6. The method according to one of claims 1 to 5, **characterized in that** at least one second moulding (4, 16) is removed from the composite directly after the coating.

7. The method according to one of claims 1 to 6, **characterized in that** the at least one second moulding (4, 16) is removed from the composite by specific heating and/or cooling of the composite using the different expansion behaviour of the materials of the first moulding (2, 15) and second moulding (4, 16).

8. The method according to one of claims 1 to 7, **characterized in that** at least one of the removed second mouldings (4, 16) is supplied to a recycling process directly after removal.

9. The method according to one of claims 1 to 8, **characterized in that** the coating in the partial regions of the composite is removed in particular by means of dry ice jets and/or brushing off.

10. The method according to one of claims 1 to 9, **characterized in that** an opening region of the second moulding (8, 9) is bevelled with respect to the exposed partial region (5) of the first moulding (2).

11. The method according to one of claims 1 to 12, **characterized in that** at least one material bridge (10) is arranged above the exposed partial region (5) of the first moulding (2) at a distance from the surface of the first moulding (2).

12. The method according to one of claims 1 to 11, **characterized in that** at least one first moulding (2) is overmoulded with a plurality of second mouldings (4) in several cycles of the injection moulding process.

13. The method according to one of claims 3 to 12, **characterized in that** at least one electronic and/or electrical component is inserted in the injection moulding tool and overmoulded or back-moulded during injection moulding of the first moulding (2).

14. The method according to one of claims 3 to 12, **characterized in that** at least one component of metal, plastic, ceramic or glass is inserted in the injection moulding tool and is overmoulded or back-moulded during injection moulding of the first moulding (2).

15. The method according to one of claims 13 or 14, **characterized in that** the components overmoulded or back-moulded in the first moulding (2) come directly in contact with a coating material during the subsequent plasma coating (6).

## Revendications

1. Procédé destiné à fabriquer un composant MID (1) en 3 D avec une surface structurée, lors duquel on fabrique un corps composite via un procédé de moulage par injection multicomposants et on le revêt ensuite, **caractérisé en ce**
- **qu'**on fabrique le corps composite sous la forme d'un corps composite non adhérent à partir d'au moins un premier corps moulé (2) fabriqué par procédé de moulage par injection et d'au moins un deuxième corps moulé (4) fabriqué par procédé de moulage par injection, de telle sorte que des zones partielles (5) de la surface de chaque premier corps moulé (2) restent libres,
- **qu'**on revêt au moins partiellement le corps composite au moyen d'un revêtement au plasma (6), de sorte que les zones partielles (5) libres de chaque premier corps moulé (2) soit revêtues au moins partiellement et
- **qu'**on retire au moins un deuxième corps moulé (4) du corps composite.

2. Procédé selon la revendication 1, caractérisé en ce l'une des matières pour le processus de moulage par injection est un polyamide.

3. Procédé selon la revendication 1 ou 2, **caractérisé en ce qu'**on fabrique par procédé de moulage par injection au moins un premier corps moulé (15) qui comporte au vis-à-vis de la surface restante du premier corps moulé (15) des creux (14) qui se trouvent dans les zones partielles (5) libres pour le revêtement au plasma (6).

4. Procédé selon l'une quelconque des revendications 1 à 3, **caractérisé en ce qu'**au moins l'une des matières utilisées dans le procédé de moulage par injection ne fait preuve d'aucune ou que d'une faible adhérence par rapport à une matière de revêtement appliquée au moyen du revêtement au plasma (6).

5. Procédé selon l'une quelconque des revendications 1 à 4, **caractérisé en ce qu'**entre les étapes du processus, lors du procédé de moulage par injection multicomposants, on munit au moins l'une des matières des corps moulés (2, 4, 15, 16) d'un revêtement antiadhésif.

6. Procédé selon l'une quelconque des revendications 1 à 5, **caractérisé en ce que** le retrait d'au moins un deuxième corps moulé (4, 16) du corps composite a lieu directement après le revêtement.

7. Procédé selon l'une quelconque des revendications 1 à 6, **caractérisé en ce que en ce que** le retrait d'au moins un deuxième corps moulé (4, 16) du corps composite s'effectue par chauffage et/ou refroidissement ciblé(s) du corps composite en exploitant le différent comportement à la dilatation des matières des premiers corps moulés (2, 15) et des deuxièmes corps moulés (4, 16).

8. Procédé selon l'une quelconque des revendications 1 à 7, **caractérisé en ce qu'**on amène au moins l'un des deuxièmes corps moulés (4, 16) à un procédé de recyclage immédiatement après le retrait.

9. Procédé selon l'une quelconque des revendications 1 à 8, **caractérisé en ce que** dans des zones partielles, on retire le revêtement du corps composite notamment au moyen d'un procédé de nettoyage cryogénique et/ou par brossage.

10. Procédé selon l'une quelconque des revendications 1 à 9, **caractérisé en ce qu'**une zone d'ouverture du deuxième corps moulé (8, 9) est chanfreinée par rapport à la zone partielle (5) libre du premier corps moulé (2).

11. Procédé selon l'une quelconque des revendications 1 à 12, **caractérisé en ce qu'**à un écart de la surface du premier corps moulé (2), on place un pont de matière (10) par-dessus la zone partielle (5) libre du premier corps moulé (2).

12. Procédé selon l'une quelconque des revendications 1 à 11, **caractérisé en ce qu'**en plusieurs cycles du procédé de moulage par injection, on enrobe par injection au moins un premier corps moulé (2) avec plusieurs deuxièmes corps moulés (4).

13. Procédé selon l'une quelconque des revendications 3 à 12, **caractérisé en ce qu'**on insère au moins un composant électronique et /ou électrique dans le moule d'injection et on l'enrobe par injection ou on le rétro-injecte lors de l'injection du premier corps moulé (2).

14. Procédé selon l'une quelconque des revendications 3 à 12, **caractérisé en ce qu'**on insère au moins un composant en métal, en matière plastique, en céramique ou en verre dans le moule d'injection et on l'enrobe par injection ou on le rétro-injecte lors de l'injection du premier corps moulé (2).

15. Procédé selon la revendication 13 ou 14, **caractérisé en ce que** lors du revêtement au plasma (6) consécutif, les composants enrobés par injection ou rétro-injectés dans le premier corps moulé (2) entrent directement en contact avec une matière de revêtement.
